# EUROPEAN PATENT APPLICATION

(11) **EP 3 054 565 A1**
(43) Date of publication of application: **10.08.2016**
(21) Application number: 15154211.5
(22) Date of filing: 06.02.2015
(51) Int. Cl.: H02K 3/24, H02K 3/487, H02K 9/04, H02K 9/08, H02K 7/18

(54) **Cooling arrangement**

(71) Applicant: Siemens Aktiengesellschaft, 80333 München (DE)
(72) Inventor: Airoldi, Giovanni, 7330 Brande (DK); Hansen, Kim Granly, 7000 Fredericia (DK); Thomas, Arwyn, Cheshire, SK8 6HW (GB)

(57) **Abstract**

The invention describes a cooling arrangement (1) realised to cool stator windings (30) of a generator stator (3) enclosed in a generator housing (50), which cooling arrangement (1) comprises a plurality of axial cooling channels (100), wherein an axial cooling channel (100) extends between a pair of windings (30) arranged between adjacent stator teeth (33); an axial channel cover arrangement realized to separate the axial cooling channels (100) from an air-gap (40) of the generator (4), wherein an axial channel cover (10) of the cover arrangement comprises at least one entrance opening (11M, 11B) connecting the air-gap (40) with an axial cooling channel (100); and a flow arrangement for conveying a gaseous coolant flow (AF) into the air-gap (40) and the axial cooling channels (100). The invention also describes a direct-drive wind turbine (5), and a method of cooling stator windings (30) of a generator stator (3).

## Description

The invention describes a cooling arrangement for cooling the stator windings of a stator, a direct-drive wind turbine comprising such a cooling arrangement, and a method of cooling stator windings.

In a wind turbine generator, some way of cooling the hot coils or windings of the armature is necessary, since the electrical resistance of the windings is proportional to their temperature, and the power output of the generator decreases as the resistance increases. Furthermore, an air-gap between stator and rotor is generally very small, so that heat from the windings may also be transferred to the magnets if these are exposed to the hot windings across the air-gap. Excessively high temperatures in the magnets can lead to deterioration over time. Therefore, it is necessary to ensure that the winding temperature is kept at an acceptably low level.

In one approach to cooling such a generator, a gaseous coolant such as air can be blown into the air-gap, where it absorbs heat from the windings. The warmed air can then be expelled from the generator. Alternatively, the air can pass from the air-gap through radial channels in the stator body and into the stator interior. In one type of generator design, a pair of windings is arranged between adjacent stator teeth, leaving an axial channel between the windings, and the cooling airflow can enter this space to absorb heat from the windings. A problem with this type of cooling arrangement is that the gaseous coolant will always follow the easiest path and may therefore not always reach the hot winding regions. This leads to an insufficient cooling of the windings.

It is therefore an object of the invention to provide an improved way of cooling the stator windings.

This object is achieved by the cooling arrangement of claim 1; by the direct-drive wind turbine of claim 13; and by the method of claim 14 of cooling stator windings.

According to the invention, the cooling arrangement is realised to cool stator windings of a generator stator enclosed in a generator housing, and comprises a plurality of axial cooling channels, wherein an axial cooling channel extends between a pair of windings arranged between adjacent stator teeth extending outward from a cylindrical stator body; an axial channel cover arrangement realized to separate the axial cooling channels from an air-gap of the generator, wherein an axial channel cover of the cover arrangement comprises at least one entrance opening connecting the air-gap with an axial cooling channel; and a flow arrangement for conveying a gaseous cooling flow into the air-gap.

In the context of the invention, the term "flow arrangement" is to be understood as any element or component of the cooling arrangement that serves to guide, convey or otherwise transport the gaseous cooling flow along a predefined path. The "flow arrangement" can comprise ducts, channels, blowers, direction reversing elements, etc., as will be explained in the following.

An advantage of the cooling arrangement according to the invention is that an efficient cooling of the hot windings can be achieved with relatively little effort. A cooling gaseous flow can be conveyed into the air-gap, from where it can pass at predefined points, i.e. at the entrance openings, into an axial channel between adjacent windings. The cooling airflow is therefore compelled to pass alongside the windings, and is effectively contained in an axial channel until it reaches an exit of that axial channel at either end of the stator. In this way, the cooling gaseous flow is assisted in absorbing heat from the windings in a more effective manner. As indicated above, the temperature in the windings has an effect on the power output of the generator, so the improved cooling can contribute to an improvement in the generator's performance. Furthermore, the improvement in cooling effectiveness can be achieved without any alteration to the stator body, which can be left whole. For example, it is not necessary to form radial channels through the stator body into the stator interior.

According to the invention, the direct-drive wind turbine comprises an outer rotor and an inner stator, wherein the outer rotor is arranged on a rotatable generator housing; and a cooling arrangement according to the invention for cooling the stator windings.

An advantage of the wind turbine according to the invention is that the generator's stator windings can be cooled very effectively and efficiently, so that heat-related power losses of the wind turbine can be minimized or even eliminated.

According to the invention, the method of cooling stator windings of a stator enclosed in a generator housing comprises the steps of providing a plurality of axial cooling channels, wherein an axial cooling channel extends between a pair of windings arranged between adjacent stator teeth; providing an axial channel cover arrangement to separate the axial cooling channels from an air-gap of the generator, wherein an axial channel cover of the cover arrangement comprises at least one entrance opening connecting the air-gap with an axial cooling channel - i.e. providing a passage from the air-gap into the axial cooling channel - and conveying a cooling gaseous flow into the air-gap.

An advantage of the method according to the invention is that, with relatively little cost and effort, the stator windings can be cooled efficiently and effectively. Furthermore, an existing generator with a pair-wise arrangement of windings on the stator and an air cooling system can be retro-fitted with relatively little cost to include an axial channel cover arrangement as described above to improve the effectiveness of the air-cooling system.

Particularly advantageous embodiments and features of the invention are given by the dependent claims, as revealed in the following description. Features of different claim categories may be combined as appropriate to give further embodiments not described herein.

In the following, it may be assumed that the generator is a wind turbine generator, particularly a direct-drive generator with an outer rotor that is directly caused to rotate by the action of the rotor blades. Furthermore, it may be assumed that the gas used by the cooling arrangement is air, although it shall be understood that any suitable gas could be used. Therefore, without restricting the invention in any way, the term "cooling gaseous flow" as used in the following may therefore be understood as a cooling airflow, and any reference to a "gaseous coolant" can be assumed to refer to air. The cooling airflow can absorb heat from the heat source presented by the hot stator windings during operation of the generator.

In a direct-drive wind turbine, the stator windings are arranged on a cylindrical stator body, which can have a diameter of several metres. The stator is generally given some structural support by essentially circular front and rear faces. The interior of the stator is essentially hollow, and affords room for various components, particularly components of the cooling arrangement. The stator body is structurally supported by one end plate at the drive end of the generator and another end plate at the non-drive end. Magnets, usually permanent magnets, are mounted on the interior surface of the outer rotor, and are separated from the stator windings by a narrow air-gap. As mentioned above, the generator construction makes it difficult to bring a cooling medium close to the heat source, i.e. the windings. The cooling arrangement according to the invention improves the effectiveness of a gaseous coolant by ensuring that the coolant is conveyed as closely as possible along the hot windings over the extent of the axial channels between adjacent windings.

Preferably, once the cooling airflow has passed into an axial cooling channel, as much as possible of the air should remain within the cooling channel before the cooling airflow reaches an exit at an outer end of the stator. Therefore, in a preferred embodiment of the invention, an axial channel cover comprises one or more form-fit elements arranged to fit between the uppermost or outermost surfaces (relative to the axis of rotation of the generator) of a winding pair and a stator tooth pair. A form-fit realization ensures that there are no significant gaps between cover, windings and stator tooth, so that cooling air cannot "escape" back into the air-gap, and cannot enter the axial cooling channel other than through the entrance openings. A cover element can be made of any suitable material. Preferably, a thermally insulating material is used so that heat from the windings is contained to some extent in the axial winding channel instead of being given off in the direction of the magnets.

The windings of an inner stator are preferably secured in some way to the stator body to ensure that they remain in place during operation of the generator, withstanding any magnetic pull between the windings and the magnets. In one possible realization, the height of a stator tooth is greater than the height of a winding, so that the stator teeth extend further outward, and each stator tooth is wider at the top. In a preferred embodiment of the invention, the stator teeth are angled at their outermost ends, and an axial channel cover comprises a wedge-shaped element that fits snugly between the uppermost winding surfaces and the angled sides of two adjacent stator teeth.

The cooling airflow path from the air-gap into the axial cooling channels is preferably realized by an entrance opening that comprises a main opening located midway along an axial channel. In such an embodiment, the cooling airflow travels through the air-gap from an outer end of the generator in towards the centre of the air-gap, and then passes through the main openings of the axial channel covers, into the axial cooling channels. The cooling airflow can then pass alongside the hot windings, absorbing heat from these as it travels towards an exit.

A winding or coil generally comprises a "loop" of a low-resistivity metal, with two straight halves extending along the length of the stator, arranged between parallel stator teeth. At either end of the stator, a winding undergoes a 180° turn. A wind turbine generator is generally realised as a three-phase machine, i.e. the windings are arranged in interleaved groups of three. Since each winding must undergo the 180° turn at each end of the stator, the ends of the windings for three phases must be interleaved, and the interleaved winding ends extend beyond the outer ends of the stator in a "winding overhang". To ensure minimum losses and balanced phases, the winding overhang is generally realised in as compact a manner as possible. However, the temperature in the winding overhang at either end of the stator is generally higher than the temperature in the straight winding portions between the stator teeth. Since the conductivity of the winding ends decreases as their temperature increases, the heat-related losses of the generator increase. The generator performance is directly related to the magnitude of the current that can be induced in the windings, and the winding current in turn is limited by the winding temperature. Therefore, the power output of the generator is effectively limited by the hottest temperature in the windings, usually in the winding overhang. Therefore, in a preferred embodiment of the invention, an entrance opening comprises a bypass opening located at an outer end of an axial channel. A "bypass opening" can be understood as an opening that allows some fraction of the cooling airflow to bypass the longer path to the main opening in the centre of the air-gap, so that this fraction can essentially directly pass to a hotter winding end region. By conveying some portion of the cooling airflow essentially directly to the hotter end regions of the windings, the temperature in the winding overhang can be lowered, thus improving the generator's overall performance.

An entrance opening can be formed in an axial channel cover in a number of ways. In one embodiment of the invention, an entrance opening can comprise a through-hole in an axial channel cover. The axial channel cover can be realized as one piece with a length corresponding essentially to the length of the stator. In such an embodiment, for example, a "main opening" can comprise one or more through-holes formed midway along the axial channel cover. Similarly, a "bypass opening" can comprise one or more through-holes formed towards one or both outer ends of the axial channel cover.

Alternatively, an axial channel cover can comprise two or more parts, and an entrance opening can comprise a gap or slit between adjacent cover parts. For example, two wedge-shaped elements, each with a length slightly less than half of the stator length, can be arranged between adjacent stator teeth, on top of the winding pair, to leave a gap in the middle. The cooling airflow can enter this gap to pass into the space between the pair of windings. In the same way, an axial channel cover can comprise four or more parts. For example, four wedge-shaped elements with appropriate lengths can leave one "bypass" gap near each outer end of the stator, as well as one "main" gap in the middle. A portion of the cooling airflow can enter the bypass gaps to cool the winding overhang region, while the remainder enters the main gap to cool the straight winding sections.

As indicated above, a cooling airflow can be guided into the hot regions of the generator to absorb heat from the windings. In one embodiment of the invention, the cooling airflow can originate from outside the generator. In the case of a generator mounted inside the nacelle of a wind turbine, the cooling airflow can originate from outside the nacelle. Warmed air can be expelled from the wind turbine. In such an embodiment, the cooling airflow is obtained at low cost, but its capacity to cool may be limited by warm ambient air temperatures. Furthermore, it may be necessary to pre-treat the cooling airflow, for example to dry the air and to remove any airborne particles such as dust. The air intake is generally arranged at the non-drive end in the case of a direct-drive wind turbine generator, since it would be impracticable to locate such an air intake at the drive end. In such an embodiment, the airflow arrangement preferably comprises at least one axial duct arranged in the stator interior for conveying a portion of the cooling airflow from the non-drive end of the generator to a cavity at the drive end of the generator. In this way, the cooling airflow can enter the axial cooling channels from both ends of the stator.

Alternatively, the airflow can be contained within the generator. In such an embodiment, the warmed air can be cooled using some appropriate cooling apparatus before being directed back into the hot regions of the generator.

In either embodiment, the airflow arrangement preferably comprises at least one fan arranged to direct a cooling airflow into the air-gap and/or to extract a warmed airflow from the stator interior. In the case of a cooling arrangement using air from outside the generator, the airflow arrangement preferably comprises an air intake for obtaining a cooling airflow, and an outflow duct for expelling warmed air from the generator. Such an outflow duct can comprise an outflow fan arranged to suck air out of the generator. In such an embodiment, the outflow fan can generate enough suction to also draw the cooling airflow through the air intake. Equally, a fan arranged in the air intake can be sufficient to also expel the warmed air through the outflow duct. Of course, any number of fans or blowers can be implemented as required.

In the alternative embodiment, the airflow is contained within the generator, and the airflow arrangement is preferably realized to circulate the airflow along a cooling path enclosed by the generator. In this embodiment, to contain the air within the generator, the airflow arrangement preferably comprises a seal arrangement realized to define a cavity at the non-drive end of the generator. The seal arrangement can comprise any suitable component or element that acts to separate the generator space from an adjacent nacelle space, so that air does not intentionally pass between the generator space and the nacelle space. In this way, for example, a cavity can be defined at the non-drive end of the generator, bounded at least by the stator end face and a rotor brake disc. The cooling air-flow can travel through this cavity on its way to the axial cooling channels at the non-drive end. At the drive end of the generator, a sealed-off cavity is already present, defined by the generator housing and the stator front face. As mentioned above, the air coolant is contained within the generator and "re-cycled". To this end, the airflow arrangement preferably comprises a number of heat exchangers to extract heat from the warmed air, and to a provide cooling airflow for recirculation into the air-gap. In this embodiment, the airflow arrangement also preferably comprises a number of end face openings in one or both stator end faces, and a cover or manifold arranged to define an airflow path from the axial cooling channels, through the end face openings, and back into the stator interior. The end face cover or manifold acts to physically separate the cooling airflow - on its way to enter the axial channels - from the warmed air that is leaving the axial channels. In this way, the warmed air can be directed into the stator interior so that it can be treated to remove heat from the air, while the cooling airflow does not lose its cooling capacity before entering the air-gap. The cool air is effectively prevented from mixing with the warmed air.

As indicated above, the temperature in the winding overhang may be significantly higher than the temperature in the straight winding sections. In a preferred embodiment of the method according to the invention, a temperature difference between a winding body and a winding overhang is determined. This temperature difference can be estimated using a suitable modelling and/or simulation technique, for example. Alternatively, the temperature difference can be observed in an existing generator of a comparable type and construction. In either approach, the number and/or positions of entrance openings is preferably determined on the basis of the temperature difference.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Fig. 1 shows a direct-drive wind turbine with a first embodiment of a cooling arrangement according to the invention;
Fig. 2 shows a cross-section through a generator cooled by a cooling arrangement according to the invention;
Fig. 3 shows a direct-drive wind turbine with a second embodiment of a cooling arrangement according to the invention;
Fig. 4 shows a direct-drive wind turbine with a third embodiment of a cooling arrangement according to the invention;
Fig. 5 shows a detail of an embodiment of a cooling arrangement according to the invention.

In the diagrams, like numbers refer to like objects throughout. Objects in the diagrams are not necessarily drawn to scale.

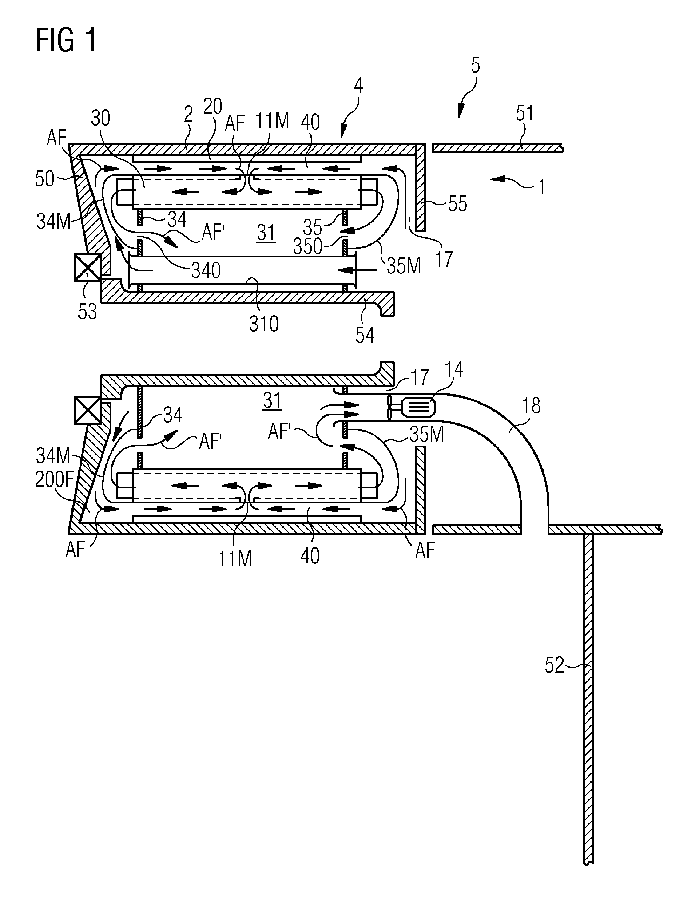

Fig. 1 shows a direct-drive wind turbine 5 with a first embodiment of a cooling arrangement 1 according to the invention. This exemplary embodiment shows a generator 4 housed in a housing 50, which can rotate relative to a stationary nacelle 51 mounted on a wind turbine tower 52. The generator comprises an outer rotor 2 arranged about a stationary stator 3, which is mounted about a central shaft 54. The stator 3 is essentially hollow, so that a cavity 31 extends about the main shaft 54. This cavity 31 can be used for various purposes, for example to provide an access passage to the hub, and/or to accommodate various components or modules.

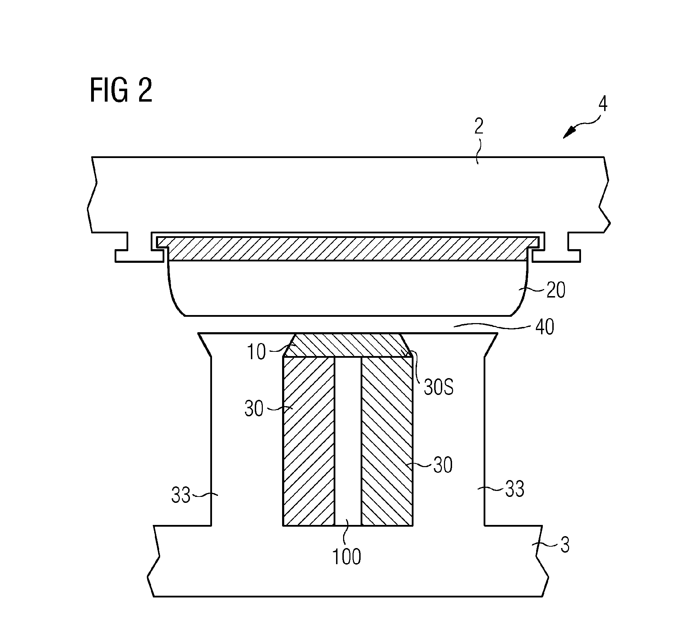

A hub and blades (not shown) are connected to the rotatable housing 50 of the rotor 2 at the "drive end" by means of a main bearing 53. During operation of the wind turbine, the blades cause the rotor 2 to rotate about the stator 3. Windings 30 are arranged pair-wise between stator teeth 33, as shown in Fig. 2, leaving a channel 100 between the adjacent windings 30. The channel 100 is open at both ends of the stator 3, and is separated from the air-gap 40 by an axial cover 10. Fig. 1 shows an entrance opening 11M midway along the stator 3. The windings 30 are cooled by conveying a cooling airflow AF into an air-gap 20 between rotor 2 and stator 3, from where it can pass through the entrance openings 11M into the axial channels 100 between winding pairs. The airflow absorbs heat from the hot windings 30 and then exits the axial channels 100 at either end of the stator 3.

In this embodiment, the cooling airflow AF is drawn in from outside the generator 4, for example from outside the nacelle 51. An intake 17 can be arranged between the main shaft 54 and a brake disc 55 at the "non-drive end" of the generator 4. A portion of the cooling airflow AF can pass through a duct 310 arranged in the stator interior 31 to a front cavity 200F of the generator housing 50. The warmed airflow AF' is expelled from the generator 4 by means of an extraction fan 14 arranged in an outflow duct 18. To prevent the cooling airflow AF from mixing with the warmed air AF' leaving the axial channels 100 at either end of the stator 3, a shield or manifold 34M, 35M is mounted on both end faces 34, 35 of the stator 3. Openings 340, 350 in the stator end faces 34, 35 allow the warmed air AF' to pass into the stator interior 31, from where it is drawn into the outflow duct 18 and expelled. A front face manifold 34M therefore guides a warm airflow AF' from the front ends of axial channels 100 towards the front face openings 340 and into the stator interior 31, while a rear face manifold 35M guides a warm airflow AF' from the other ends of the axial channels 100 towards the end face openings 350 and into the stator interior 31. The front face and rear face openings 340, 350 can be as large as is structurally practicable, considering that the front and rear faces 34, 35 serve a structural support function. These openings 340, 350 can be formed in the stator end faces 34, 35 as an arrangement of radial slits, as an array of holes, or in any other suitable way.

Fig. 2 shows a cross-section through part of a generator 4 cooled by a cooling arrangement 1 according to the invention. As already indicated, the diagram shows a stator 3 with stator teeth 33 directed toward a rotor 2. A pair of windings 30 is arranged between each pair of adjacent stator teeth 33, so that a channel 100 remains between the windings 30. To separate the axial channel 100 from the air-gap 40, an axial cover 10 is used to close off the opening at the top of the windings 30 and stator teeth 33. In this exemplary embodiment, the axial cover 10 comprises a wedge-shaped cover 10 that fits snugly between the upper surfaces 30S of the windings 30 and the upper edges of the stator teeth 33. The axial cover 10 extends over the entire axial length of the stator 3, with the exception of the entrance opening(s) that intentionally allow a cooling airflow AF to pass from the airgap 40 into the axial channel 100. Since the axial cover 10 can also thermally insulate the hot windings 30 from magnets 20 mounted on the rotor 2, the cooling capacity of the airflow AF will not be reduced significantly as the cooling airflow AF passes through the air-gap 40 on its way to the entrance openings.

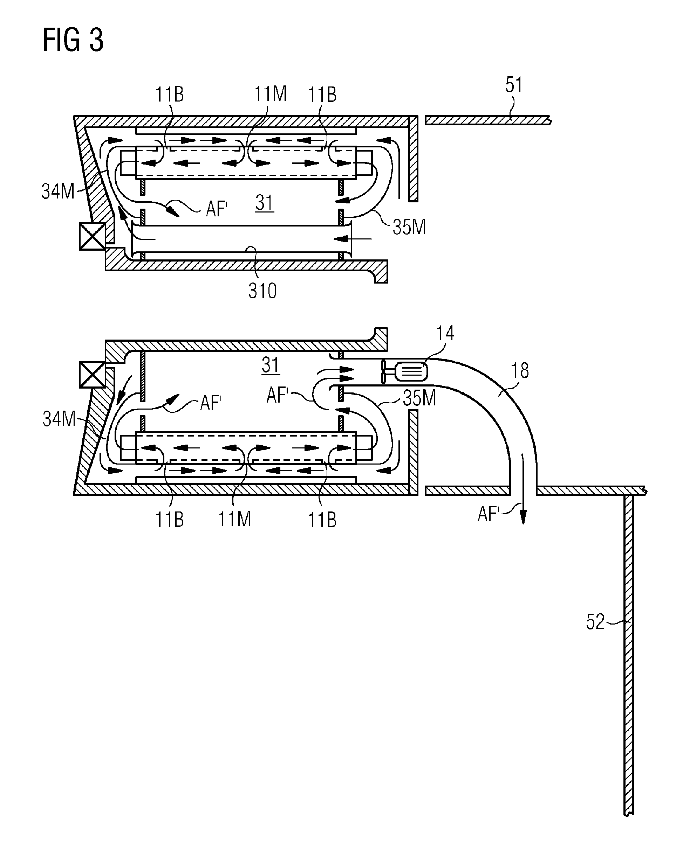

Fig. 3 shows a further embodiment of a cooling arrangement 1 according to the invention used in a direct-drive wind turbine 5. This embodiment is similar to that of Fig. 1 above, but includes additional entrance openings 11B in the axial covers 10. These additional or bypass openings 11B allow some of the cooling airflow AF to pass essentially directly to the hotter winding end regions, so that these are cooled more effectively.

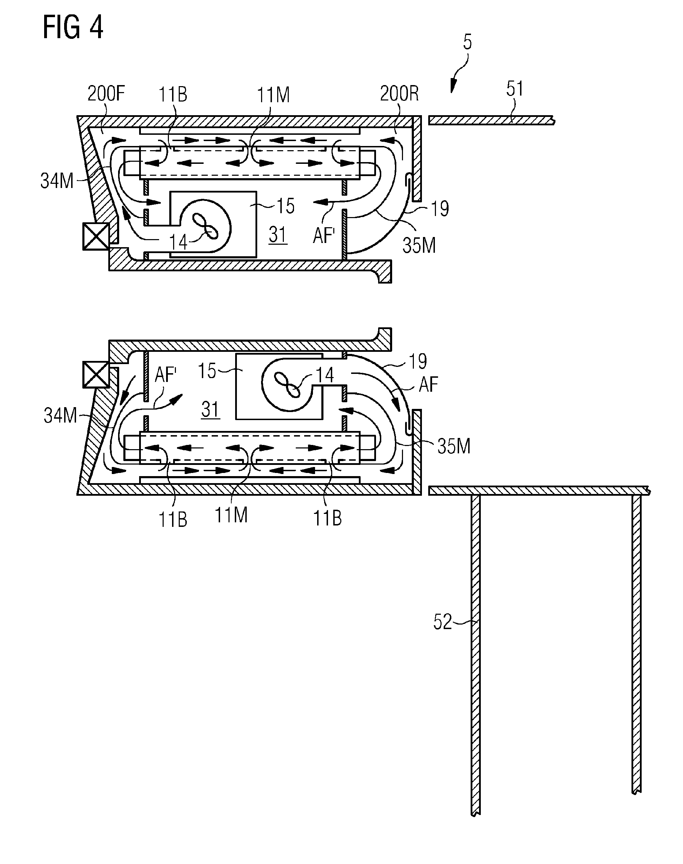

Fig. 4 shows another embodiment of a cooling arrangement 1 according to the invention. Here, the axial covers 10 are shown to have main openings 11M as well as bypass openings 11B, and the warmed airflow AF' is guided into the stator interior 31 by manifolds 34M, 35M and end face openings 340, 350. In this embodiment, instead of expelling the warmed air AF' from the generator 4, it is cooled using heat exchangers 15. The cooled air AF is then directed into a cavity 200F at the drive end of the generator 4 and also into a cavity 200R at the non-drive end of the generator 4. An arrangement of fans 14 is used to this purpose. The cooling airflow AF can thus enter the air-gap 40 from both ends of the stator 3, and subsequently pass from the openings 11M, 11B into the axial channels 100. A labyrinth seal 19 between the stationary stator 3 and the rotating rotor 2 ensures that the air does not escape from the generator 4 into the nacelle.

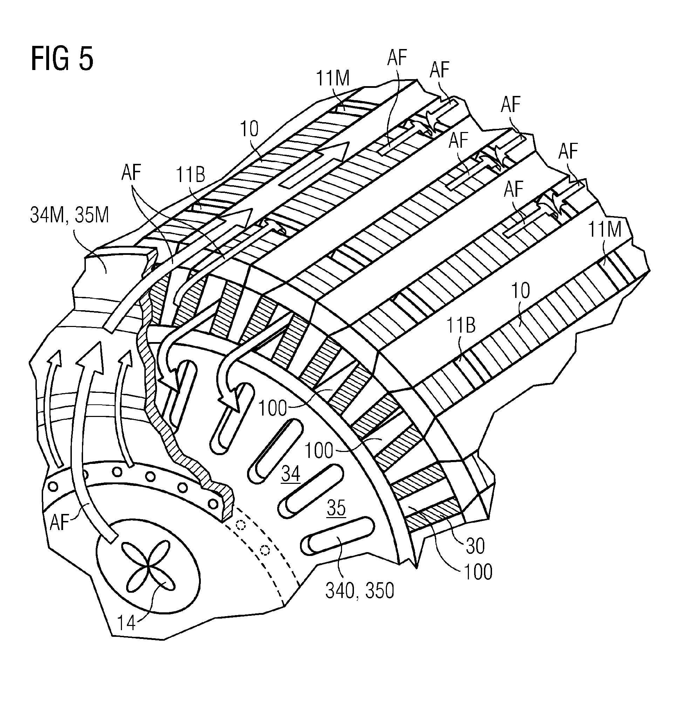

Fig. 5 shows a detail of a cooling arrangement 1 according to the invention. The view can be towards either end face of the stator 3, and shows an end face cover 34M, 35M in cut-away. For the sake of clarity, the rotor and its magnets are not shown, and the diagram instead shows a direct view onto the stator 3. The winding overhang sections are also not shown, and it will be assumed that a winding comprises two straight winding portions connected by a 180° turn, and that these end regions overlap as described above.

A cooling airflow AF travels into the narrow air-gap between rotor and stator 3, and moves towards the centre of the air-gap. Here, a portion of the cooling airflow AF enters a bypass opening 11B located near the outer end of the stator 3 close to the winding overhang 300, and enters the axial cooling channel 100 to cool the windings 30 at this hotter end region. The remainder of the cooling airflow AF continues to the central or main entrance opening 11M, where it also enters the axial cooling channel 100 and then returns to the axial channel exit at the stator front face 34F or end face 35F. The end face cover 34M, 35M acts to guide the warmed airflow AF' back into the stator interior 31. From there, it can either be expelled from the wind turbine (as described in Figs. 1 and 3 above) or cooled again (as described in Fig. 4 above).

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements.

## Claims

1. A cooling arrangement (1) realised to cool stator windings (30) of a generator stator (3) enclosed in a generator housing (50), which cooling arrangement (1) comprises
- a plurality of axial cooling channels (100), wherein an axial cooling channel (100) extends between a pair of windings (30) arranged between adjacent stator teeth (33) ;
- an axial channel cover arrangement realized to separate the axial cooling channels (100) from an air-gap (40) of the generator (4), wherein an axial channel cover (10) of the cover arrangement comprises at least one entrance opening (11M, 11B) connecting the air-gap (40) with an axial cooling channel (100); and
- a flow arrangement for conveying a gaseous coolant flow (AF) into the air-gap (40) and the axial cooling channels (100).

2. A cooling arrangement according to claim 1, wherein an axial channel cover (10) comprises one or more form-fit elements (10) arranged to fit between outer surfaces (30S) of a winding pair (30) and a stator tooth pair (33).

3. A cooling arrangement according to claim 1 or claim 2, wherein an axial channel cover (10) comprises a wedge-shaped element (10).

4. A cooling arrangement according to any of the preceding claims, wherein an entrance opening (11M) comprises a main opening (11M) located midway along an axial channel (100).

5. A cooling arrangement according to any of the preceding claims, wherein an entrance opening (11B) comprises a bypass opening (11B) located at an outer end of an axial channel (100).

6. A cooling arrangement according to any of the preceding claims, wherein an entrance opening (11M, 11B) comprises a through-hole in an axial channel cover (10).

7. A cooling arrangement according to any of the preceding claims, wherein the flow arrangement comprises a number of end face openings (340, 350) in stator end face (34, 35), and an end face cover (34M, 35M) arranged to define a flow path from the axial cooling channels (10) into a stator interior (31).

8. A cooling arrangement according to any of the preceding claims, wherein the flow arrangement comprises at least one fan (14) arranged to direct a cooling gaseous flow (AF) into the air-gap (40) and/or to extract a warmed gaseous flow (AF') from the stator interior (31).

9. A cooling arrangement according to any of the preceding claims, wherein the flow arrangement comprises an intake (17) for obtaining a cooling gaseous flow (AF), and an outflow duct (18) for expelling a warmed gaseous flow (AF') from the generator (4).

10. A cooling arrangement according to any of the preceding claims, according to claim 9, wherein the flow arrangement comprises at least one axial duct (310) arranged in the stator interior (31) for conveying the cooling gaseous flow (AF) from a non-drive end of the generator (4) to a cavity (200F) at the drive end of the generator (4).

11. A cooling arrangement according to any of the preceding claims, wherein the flow arrangement is realized to circulate a cooling gaseous flow (AF) within the generator (4).

12. A cooling arrangement according to any of the preceding claims, wherein the flow arrangement comprises a seal arrangement (19) realized to define a cavity (200R) at the non-drive end of the generator (4).

13. A direct-drive wind turbine (5) comprising
- a generator (4) with an outer rotor (2) and an inner stator (3), wherein the outer rotor (2) is arranged on a rotatable housing (50, 51); and
- a cooling arrangement (1) according to any of claims 1 to 12 for cooling stator windings (30) of the stator (3).

14. A method of cooling stator windings (30) of a generator stator (3), which method comprises the steps of
- providing a plurality of axial cooling channels (100), wherein an axial cooling channel (100) extends between a pair of windings (30) arranged between adjacent stator teeth (33);
- providing an axial channel cover arrangement to separate the axial cooling channels (100) from an air-gap (40) of the generator (4), wherein an axial channel cover (10) of the cover arrangement comprises at least one entrance opening (11M, 11B) connecting the air-gap (40) with an axial cooling channel (100); and
- conveying a cooling gaseous flow (AF) into the air-gap (40), and from the air-gap (40) into the axial cooling channels (100).

15. The method according to claim 14, comprising the steps of
- determining a temperature difference between a winding body and a winding overhang (300); and
- determining the number and/or positions of entrance openings (11M, 11B) on the basis of the temperature difference.
